# EUROPEAN PATENT SPECIFICATION

(11) **EP 1 119 951 B1**
(45) Date of publication and mention of the grant of the patent: **24.01.2007**
(21) Application number: 99970813.4
(22) Date of filing: 15.10.1999
(51) Int. Cl.: H04L 12/56

(54) **INCREASED CELL PACKET SWITCHED TRAFFIC CAPACITY**
ERHÖHTE VERKEHRSKAPAZITÄT FÜR PAKETVERMITTELTE ZELLEN
CAPACITE DE TRAFIC A COMMUTATION PAR PAQUETS DE CELLULE

(30) Priority: 16.10.1998 SE 9803543
(43) Date of publication of application: 01.08.2001
(73) Proprietor: TELEFONAKTIEBOLAGET LM ERICSSON (publ), 164 83 Stockholm (SE)
(72) Inventor: MAGUIRE, Patrick, County Leitrim (IE)
(74) Representative: Herbjörnsen, Rut
(86) International application number: PCT/SE1999/001868
(87) International publication number: WO 2000/024163

(56) References cited:
- EP-A2- 0 637 895
- WO-A1-96/38013
- WO-A2-95/35639
- GB-A- 2 313 254
- US-A- 4 974 256

## Description

### FIELD OF THE INVENTION

The present invention generally relates to mobile communications, and more particularly to different features and methods that may be employed to establish and enhance communications, and more particularly to increasing the packet switched traffic in GPRS (General Packet Radio Services) applications. However the invention will also be applicable to other mobile systems such as UMTS (Universal Mobile Telecommunication System).

### BACKGROUND OF THE INVENTION

The main application of most mobile radio systems like the Global System for Mobile communications (GSM) has been mobile telephony, which typically only supports circuit-switched communications where guaranteed, "fixed" circuits are dedicated to a user for the duration of a call. However, packet -switched applications, like facsimile transmissions and short message exchange, are becoming popular in mobile networks. Examples of this type of data transmissions include wireless personal computers, mobile offices, electronic funds transfer, etc. These data applications are characterized by "bursty" traffic where a large amount of data is transmitted over a relatively short time interval followed by significant time intervals when little or no data is transmitted.

This type of traffic may be transmitted using a circuit-switched channel, however, such a transmission does not utilise the channel in an efficient and cost-saving manner since it is likely that there will be times when the channel is reserved but is not being used. In this type of transmission the user does not share the channel with anyone else and he pays for the time he is connected.

An alternative to this type of transmission is the packet-switched type of transmission. Communication channels are in this type of system shared by several user simultaneously. This is accomplished by performing the transmission by sending grouped segments of the relevant data to be transmitted.

GPRS (General Packet Radio Services) is a standardised packet switched data service to be used in GSM-based systems. The GPRS and the GSM are designed to coexist without disturbances and GPRS is compatible with other data networks, e.g. IP and X.25. Using GPRS, data may be transmitted to and from the mobile radio equipment, e.g. the mobile phone or a mobile wireless terminal. Using GPRS, the user may remain in contact with the accessed data network for as long as desired, but as mentioned above shares the channel with other users, thus only has to pay for the time he is transmitting data. This implies that in the future there is likely to be much more traffic on the channels than in the circuit-switched type transmissions, which in any way would not allow for that much and kind of traffic.

As may be understood this will put a heavy load on the GSM-GPRS system in the future, the GSM dependent on the number of base transceiver stations and the number of cells connected to that base station. Each base transceiver station can carry a number of ongoing transmissions simultaneously depending on the architecture used.

### SUMMARY OF THE INVENTION

The GPRS architecture utilises the existing GSM nodes and adds new ones for handling of packet switching, point to multi-point service handling and inter-working with existing packet data networks. The additional packet switching nodes comprise a Gateway GPRS support Node (GGSN) and a Serving GPRS Support Node (SGSN). GGSN provides the interface towards external data networks. The SGSN provides packet routing to and form the SGSN service area.

The transmitting of data through the packet channels is handled by one or more processors in a packet control unit (PCU) in a GSM Base station subsystem.

It should be noted that the packet control unit (PCU) may be located elsewhere. It may e.g. be co-located with the BTS (Base Transceiver Station) or may exist as an extra node.

There is a limit to the number of packet channels (PDCH's) which can be handled in such a processor, which has become evident with the knowledge of an increasing demand on the traffic. This is accentuated in case any of the RP's fail. Today's RPP processor can support 256 channels at the same time. An RP is a regional processor and RPP designates a specific regional processor.

A typical channel used in this type of a transmission occupies one time slot and is configured as a 16kb/sec channel that is capable of carrying GPRS traffic, i.e. a packet data channel, PDCH. There are two types of packet data channels (PDCH), fixed and on demand. Fixed PDCH's are permanently allocated in a cell for GPRS traffic and can not be used for circuit switched traffic unless they are pre-empted. The on-demand PDCH's are allocated on demand from the data traffic requirements. These channels can be used for circuit switched traffic when they are not allocated for GPRS.

It is therefore an object of the present invention to increase the traffic capacity in cell packet switched traffic.

The present invention therefore provides a method for increasing the traffic capacity in a cell packet switched traffic and an apparatus having means for increasing the traffic capacity in cell packet switched traffic.

### BRIEF DESCRIPTION OF THE DRAWINGS

- Fig. 1: shows an exemplary Packet Control Unit (PCU) in a GSM Base Station Sub-system (BSS) for General Packet Radio Services (GPRS).
- Fig. 2: shows an implementation of a Base Station Controller (BSC)to be used in accordance with the present invention.
- Fig. 3: shows a flow diagram over one embodiment of the method according to the invention.

### DETAILED DESCRIPTION OF THE PREFERRED EMBODIMENTS OF THE INVENTION

These and other objects, advantages and features of the present invention will be more readily understood from the following detailed description of a preferred embodiments thereof, when considered in conjunction with the drawings wherein:

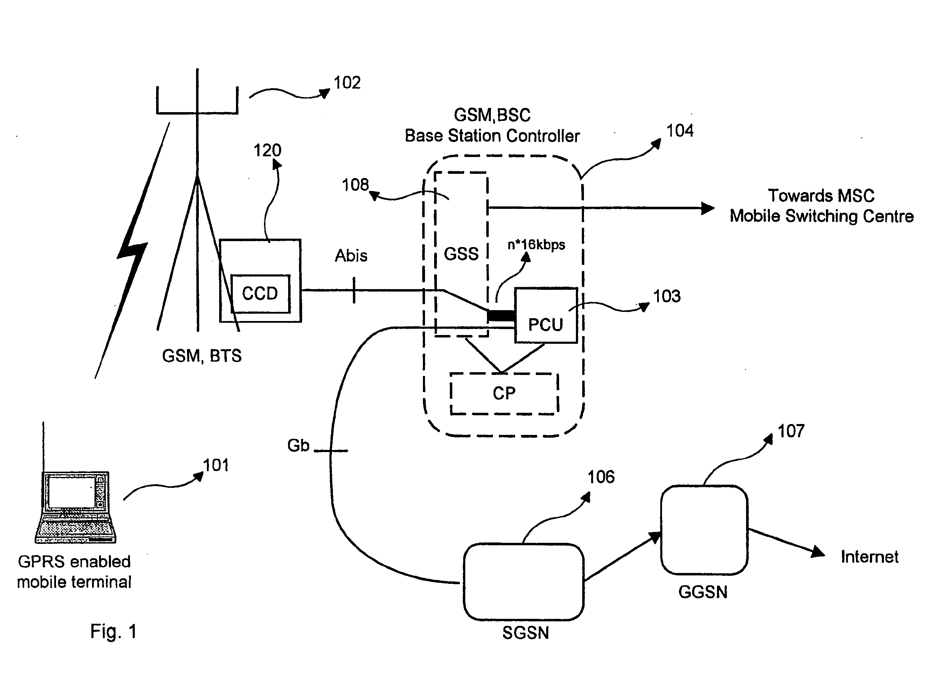

In Fig 1. is shown an overview of GSM Base Station Subsystem to be used with GPRS. The system as shown comprises a GPRS enabled wireless mobile terminal 101. The terminal 101 is adapted to transmit or receive data via a GSM, BTS (Base Transceiver Station) 102. The GPRS Packet Control Unit (PCU) 103 interfaces to GSS 108 (a Group Switch) and handles data on 16 kbps channels in a CCD 120 (Channel Coding Device) style framing in the Abis interface between the Base station 102 and the Base station controller 104. On the backbone side of the network, the PCU 103 interfaces to the SGSN (Serving GPRS Service Node) 106 and the GGSN (Gateway GPRS Service Node) 107 by 2Mbps wide-band Frame Relay connections, the Gb interface 108. The GGSN 107 provides the gateway to Internet.

From the GSS 108 data are transmitted to a MSC (Mobile services Switching Centre) 121 for performing the telephony switching functions of the system.

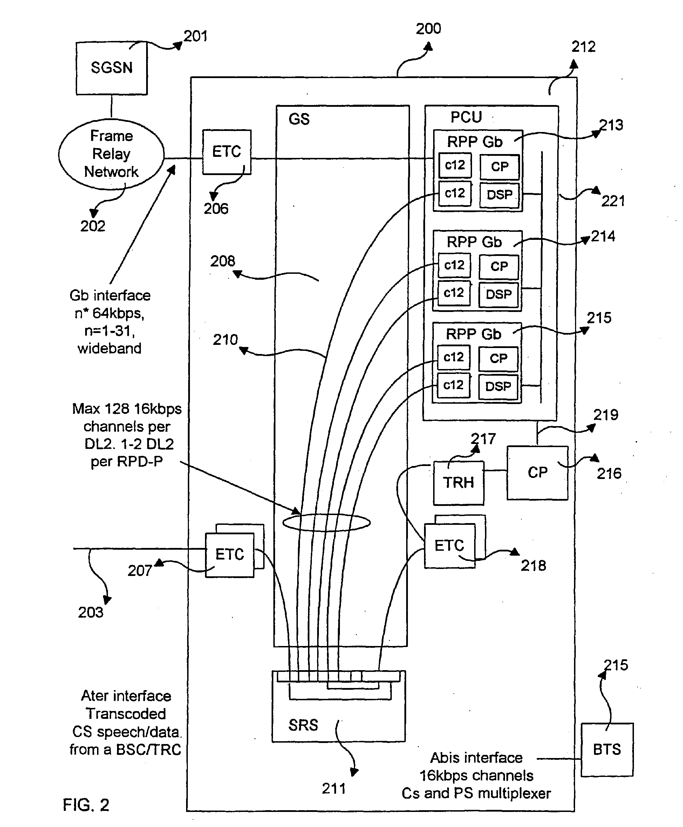

Fig. 2 shows a Base Station Controller (BSC) 200 according to the present invention and the coupling to the SGSN 201 via the Frame Relay Network 202 and an Exchange Terminal Circuit (ETC) 206. The ETC 206 is a standardised interface connection device to the Group Switch (GS) 208.

An Ater Interface providing Transcoded CS speech/data from a BSC/TRC 203 via an ETC 207 is indicated as well as the Abis interface 204 connecting the BSC 200 and the Base Transceiver Station (BTS) 215.

The implementation of GPRS in the BSC 200 is done in a Central Processor (CP) 216 and a Packet Control Unit (PCU) 212. The PCU 212 comprises one or more regional processors (RP). The RP part may be configured as a single RP or, as is shown in the figure, as a multi RP connected by an Ethernet 221. The purpose of the multi RP is to achieve more Abis channels, among the existing channels 210.

The PCU 212 in the figure is shown as having three RP(regional processor) units 213-215, each comprising a Control Processor (CP), a Digital Signal Processor (DSP), and a Digital Link, variant 2, (d12). Each d12 connecting the unit with the substrate switch 211, except one d12 in the RP 213, which connects to the SGNS 201 via the group switch (GS) 208. the group switch indicated is of a special type designated GSS

The RP's 213, 214, 215 are interconnected via an internal Ethernet 221, thus facilitating the re-disposition of the cells between the RP's.

Each RP handles a set of cells, i.e. "cells" are here used in the sense used in the art for mobile cellular telephones. One cell can only be handled in one RPP at any given point in time. Each RPP which is configured for Abis only (RPP_Abis) is predicted to be able to set up 256 packet channels while an RPP supporting Gb and Abis RPP_Gb can set up 128 packet channels.

The PCU 212 is coupled to the CP 216 via a serial bus 219 and the CP 216 is further coupled to the SRS 211 via a Transceiver Handler (THR) 217 and an ETC 218.

In the Fig. 2 is also shown that the circuit switched and packet switched channels are combined in the substrate switch 211 (SRS) for communication via the Abis Interface with the BTS 220 Base Transceiver Station.

The problem is thus as stated above that there may be a need for a larger number of channels within a few cells. As there is a limit on the number of packet channels a processor can support, GPRS coverage in many cells may be lost.

It has now been found that a redistribution of cells to processors having a lower traffic load can be made (i.e. processors supporting cells with high traffic density should support fewer cells than its peer processors).

Means are therefore provided in the processor for redistribution of cells when, and if a processor is approaching its threshold.

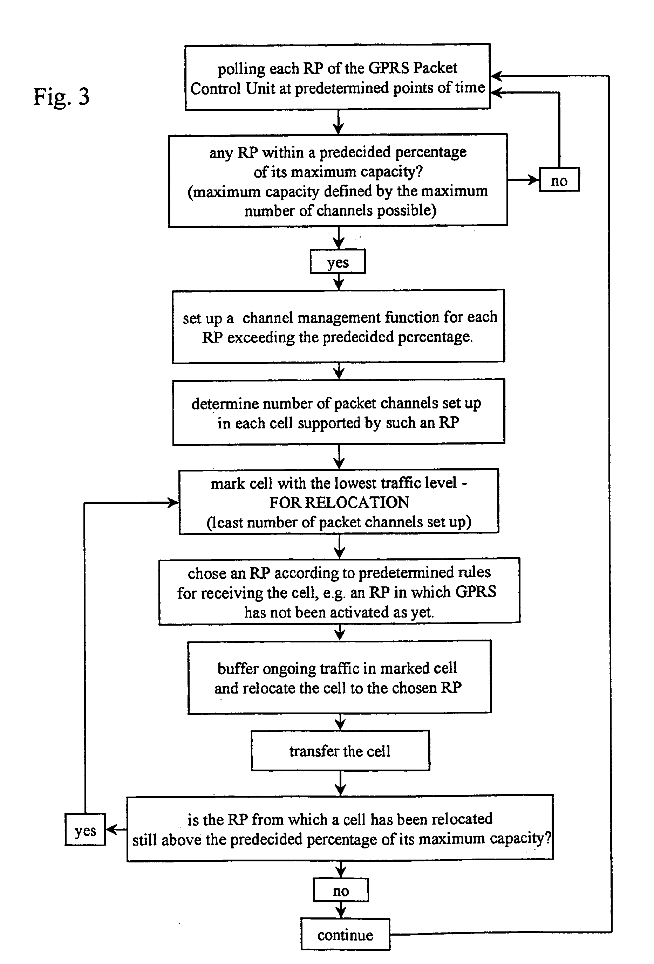

Thus, according to the invention, when the system detects that a processor is within a certain percentage e.g. 5% of its maximum capacity (maximum capacity is determined by the number of packet channels the processor can set up), a channel management function is set up for each RP exceeding the pre-decided percentage in order to determine the traffic level in each cell supported by the processor. The traffic level is measured as the number of packet channels set up in a cell. See Fig. 3.

The cell with the lowest traffic level is marked FORRELOCATION. Ongoing traffic (if any) in the cell is buffered and the cell is relocated to the chosen processor, Once relocated, data processing resumes. In the sense of the invention the cell with the lowest traffic level is the cell with the fewest packet data channels activated. If a channel is being used to transfer data it can only be used to transfer data in that cell.

If the relocation has not impacted the processor's load in a satisfactory manner, i.e. the processor is still within the threshold percentage of its maximum capacity the system will continue to poll the processor for the cell with the lowest traffic load and relocate that cell. Note that the cell with the lowest traffic level may have few/no channels activated, thereby not improving the situation. However reallocating a cell with no channels is a preventive step and may avoid further future reallocations.

A further measure is to chose the processor with the lowest traffic load to support a cell in which GPRS has been activated.

This type of dynamic allocating of cells among the available processors increases the GPRS cell coverage, thus offering a superior service to the user. Using the method according to the invention processor load will be distributed among the available processors in the PCU thus allowing optimal capacity of the PCU to be utilised.

In a future mobile system like e.g. UMTS (Universal Mobile Telecommunication System) a PCU or an equivalent network entity implementing the same functionality as the PCU described herein. Inherent the same principles and benefits of the present invention will be gained by the method adapted to such a mobile system.

Although the present invention has described in considerable detail with reference to a certain preferred version thereof, other versions are possible. GPRS has been used as an example of PRS (Packet Radio Services). Therefore the scope of the appended claims should not be limited to the description of the preferred versions contained therein.

## Claims

1. A method for increasing cell packet switched traffic capacity in a mobile communications system wherein PRS, e.g. GPRS is implemented, said system comprising a base station controller (200) and a packet control unit, PCU (212), said PCU comprising at least two processors (213, 214, 215) for handling traffic from at least two cells, said method **characterized by** the following steps:
a) polling the data traffic load of the at least two processors,
b) comparing the traffic load of each processor with a predetermined value,
c) determining the traffic level in each cell supported by each of said at least two processors for any processor in which the predetermined value is exceeded,
d) thereafter relocating the cell exhibiting the lowest traffic level to a chosen processor.

2. A method according to claim 1 **characterised in that** said packet control unit PCU is part of the base transceiver station BTS.

3. A method according to any preceding claim **characterised in that** any ongoing traffic in the chosen cell is buffered during relocation of the cell to the chosen processor and after relocation the data processing resumes.

4. A method according any of the preceding claims **characterised in that** the relocation of the cell results in a further polling of the data traffic load of any processor having had a cell relocated, repeating the steps c) and d) of claim 1 if the traffic load of said processor exceeds a predetermined value.

5. A method according to any of the claims 1-4 **characterised in that** the mobile communication system is a GSM system.

6. A method according to any of the claims 1 - 4 **characterised in that** the mobile communication system is a UMTS system.

7. A device for relocation of cells in a mobile communication system, e.g. a GSM-system in which PRS, e.g. GPRS may be implemented said system comprising a base station controller (200) and a packet control unit, PCU (212), said PCU comprising at least two processors (213, 214, 215), for handling traffic from at least two cells, **characterised in** said system having:
a) means for polling the data traffic load of the at least two processors,
b) means for comparing the traffic load of each processor with a predetermined value,
c) means for determining the traffic level in each cell supported by each of said at least two processors for any processor in which the predetermined value is exceeded,
d) means for relocating the cell exhibiting the lowest traffic level to a chosen processor.

8. A device according claim 7 **characterised in that** the PCU is part of the base transceiver station BTS.

9. A device according claim 7 or 8 **characterised in that** the mobile communication system is a GSM system.

10. A device according claim 7 or 8 **characterised in that** the mobile communication system is a UMTS system.

## Patentansprüche

1. Ein Verfahren zum Erhöhen der zellpaketvermittelten Verkehrskapazität in einem Mobilkommunikationssystem, wobei PRS, beispielsweise GPRS, implementiert wird, und das System einen Basisstations-Controller (200) und eine Paketsteuerungseinheit, PCU (212), aufweist, wobei die PCU mindestens zwei Prozessoren (213, 214, 215) umfasst, zum Handhaben von Verkehr von mindestens zwei Zellen, wobei das Verfahren durch die folgenden Schritte **gekennzeichnet** ist:
a) Abfragen der Datenverkehrslast von den mindestens zwei Prozessoren,
b) Vergleichen der Verkehrslast von jedem Prozessor mit einem vorbestimmten Wert,
c) Bestimmen der Verkehrshöhe in jeder Zelle, unterstützt durch jeden der mindestens zwei Prozessoren für jeden Prozessor, in dem der vorbestimmte Wert überschritten wird,
d) danach Verlagern der Zelle, die die geringste Verkehrshöhe zeigt, zu einem ausgewählten Prozessor.

2. Ein Verfahren nach Anspruch 1, **dadurch gekennzeichnet, dass** die Paketsteuereinheit PCU Teil der Basis-Transceiver-Station BTS ist.

3. Ein Verfahren nach einem vorhergehenden Anspruch, **dadurch gekennzeichnet, dass** irgendein weitergehender Verkehr in der ausgewählten Zelle gepuffert bzw. zwischengespeichert wird während einer Verlagerung der Zelle zu dem ausgewählten Prozessor und nach Verlagerung die Datenverarbeitung fortgesetzt wird.

4. Ein Verfahren nach einem der vorhergehenden Ansprüche, **dadurch gekennzeichnet, dass** die Verlagerung der Zelle in einer weiteren Abfrage der Datenverkehrslast von irgendeinem Prozessor resultiert, der eine Zelle verlagert hatte, Wiederholen der Schritte c) und d) des Anspruchs 1, falls die Verkehrslast des Prozessors einen vorbestimmten Wert überschreitet.

5. Ein Verfahren nach einem der Ansprüche 1 - 4, **dadurch gekennzeichnet, dass** das Mobilkommunikationssystem ein GSM-System ist.

6. Ein Verfahren nach einem der Ansprüche 1 - 4, **dadurch gekennzeichnet, dass** das Mobilkommunikationssystem ein UMTS-System ist.

7. Ein Gerät zum Verlagern der Zellen in einem Mobilkommunikationssystem, beispielsweise einem GSM-System, in dem PRS, beispielsweise GPRS, implementiert werden kann, und wobei das System einen Basisstations-Controller (200) und eine Paketsteuereinheit, PCU (212), umfasst, wobei die PCU mindestens zwei Prozessoren (213, 214, 215) umfasst, zum Handhaben von Verkehr von mindestens zwei zellen, **dadurch gekennzeichnet, dass** das System aufweist:
a) eine Einrichtung zum Abfragen der Datenverkehrslast von den mindestens zwei Prozessoren,
b) eine Einrichtung zum Vergleichen der Verkehrslast von jedem Prozessor mit einem vorbestimmten Wert,
c) eine Einrichtung zum Bestimmen der Verkehrshöhe in jeder Zelle, unterstützt durch jeden der mindestens zwei Prozessoren für einen Prozessor, in dem der vorbestimmte Wert überschritten wird,
d) eine Einrichtung zum Verlagern der Zelle, die die geringste Verkehrshöhe aufweist, auf einen ausgewählten Prozessor.

8. Ein Gerät nach Anspruch 7, **dadurch gekennzeichnet, dass** die PCU Teil der Basis-Transceiver-Station BTS ist.

9. Ein Gerät nach Anspruch 7 oder 8, **dadurch gekennzeichnet, dass** das Mobilkommunikationssystem ein GSM-System ist.

10. Ein Gerät nach Anspruch 7 oder 8, **dadurch gekennzeichnet, dass** das Mobilkommunikationssystem ein UMTS-System ist.

## Revendications

1. Procédé pour augmenter la capacité de trafic en commutation de paquets dans une cellule dans un système de communication mobile dans lequel un système de transmission de paquets par radio, par exemple le GPRS, est mis en oeuvre, ce système comprenant un contrôleur de station de base (200) et une unité de commande de paquets, PCU (Packet Control Unit) (212), cette PCU comprenant au moins deux processeurs (213, 214, 215) pour prendre en charge le trafic provenant d'au moins deux cellules, ce procédé étant **caractérisé par** les étapes suivantes :
a) on scrute la charge de trafic de données des au moins deux processeurs,
b) on compare la charge de trafic de chaque processeur avec une valeur prédéterminée,
c) on détermine le niveau de trafic dans chaque cellule qui est supportée par chacun des au moins deux processeurs, pour tout processeur dans lequel la valeur prédéterminée est dépassée,
d) on déplace ensuite vers un processeur choisi la cellule présentant le plus bas niveau de trafic.

2. Procédé selon la revendication 1, **caractérisé en ce que** l'unité de commande de paquets PCU fait partie de la station d'émetteur - récepteur de base, BTS.

3. Procédé selon l'une quelconque des revendications précédentes, **caractérisé en ce que** tout trafic en cours dans la cellule choisie est enregistré en tampon pendant le déplacement de la cellule vers le processeur choisi, et après le déplacement le traitement de données reprend.

4. Procédé selon l'une quelconque des revendications précédentes, **caractérisé en ce que** le déplacement de la cellule conduit à un examen cyclique supplémentaire de la charge de trafic de données de tout processeur dont une cellule a été déplacée, avec répétition des étapes c) et d) de la revendication 1 si la charge de trafic dudit processeur dépasse une valeur prédéterminée.

5. Procédé selon l'une quelconque des revendications 1 à 4, **caractérisé en ce que** le système de communication mobile est un système GSM.

6. Procédé selon l'une quelconque des revendications 1 à 4, **caractérisé en ce que** le système de communication mobile est un système UMTS.

7. Dispositif pour déplacer des cellules dans un système de communication mobile, par exemple un système GSM dans lequel un service de transmission de paquets par radio, par exemple le GPRS, peut être mis en oeuvre, ce système comprenant un contrôleur de station de base (200) et une unité de commande de paquets, PCU (Packet Control Unit) (212), la PCU comprenant au moins deux processeurs (213, 214, 215) pour prendre en charge le trafic provenant d'au moins deux cellules, **caractérisé en ce que** ce système comprend :
a) un moyen pour scruter la charge de trafic de données des au moins deux processeurs,
b) un moyen pour comparer la charge de trafic de chaque processeur avec une valeur prédéterminée,
c) un moyen pour déterminer le niveau de trafic dans chaque cellule supportée par chacun des au moins deux processeurs, pour tout processeur dans lequel la valeur prédéterminée est dépassée,
d) un moyen pour déplacer vers un processeur choisi la cellule présentant le plus bas niveau de trafic.

8. Dispositif selon la revendication 7, **caractérisé en ce que** la PCU fait partie de la station d'émetteur - récepteur de base, BTS.

9. Dispositif selon la revendication 7 ou 8, **caractérisé en ce que** le système de communication mobile est un système GSM.

10. Dispositif selon la revendication 7 ou 8, **caractérisé en ce que** le système de communication mobile est un système UMTS.
